# EUROPÄISCHE PATENTSCHRIFT

(11) **EP 3 562 729 B1**
(45) Veröffentlichungstag und Bekanntmachung des Hinweises auf die Patenterteilung: **16.04.2025**
(21) Anmeldenummer: 17826457.8
(22) Anmeldetag: 12.12.2017
(51) Int. Cl.: B62D 15/02

(54) **VERFAHREN ZUM LENKEN EINES FAHRZEUGS MIT EINEM AUTOMATISCHEN BETRIEBSMODUS UND FAHRZEUG MIT EINEM AUTOMATISCHEN BETRIEBSMODUS**
METHOD FOR STEERING A VEHICLE WITH AN AUTOMATIC OPERATING MODE, AND VEHICLE WITH AN AUTOMATIC OPERATING MODE
PROCÉDÉ PERMETTANT DE DIRIGER UN VÉHICULE PRÉSENTANT UN MODE DE FONCTIONNEMENT AUTOMATIQUE ET VÉHICULE PRÉSENTANT UN MODE DE FONCTIONNEMENT AUTOMATIQUE

(30) Priorität: 02.01.2017 DE 102017100005
(43) Veröffentlichungstag der Anmeldung: 06.11.2019
(73) Patentinhaber: VOLKSWAGEN AKTIENGESELLSCHAFT, 38440 Wolfsburg (DE)
(72) Erfinder: WEIDIG, Marcus, 38440 Wolfsburg (DE)
(86) Internationale Anmeldenummer: PCT/EP2017/082462
(87) Internationale Veröffentlichungsnummer: WO 2018/121984

(56) Entgegenhaltungen:
- WO-A2-2015/049254
- DE-A1- 102014 216 105
- DE-A1- 102015 210 887
- US-A1- 2016 375 925

## Beschreibung

Die vorliegende Erfindung betrifft ein Verfahren zum Lenken eines Fahrzeugs mit einem automatischen Betriebsmodus. Sie betrifft ferner ein Fahrzeug mit einem automatischen Betriebsmodus.

Die automatische Steuerung von Fahrzeugen, insbesondere die automatische Lenkung, erlaubt eine wesentliche Verbesserung des Fahrkomfort sowie der Sicherheit der Fahrzeuginsassen. Dem Fahrzeugführer wird durch die teilweise oder vollständig automatisierte Lenkung die Abgabe anstrengender Fahraufgaben erlaubt, die Fahrt ist weniger ermüdend und die im Fahrzeug verbrachte Zeit kann bei einem hochautomatisierten Fahrzeug zur Erfüllung weiterer Aufgaben genutzt werden.

Mit der Abgabe der manuellen Steuerung des Fahrzeugs an automatische Systeme geht in vielen Fällen ein Gefühl der Ungewissheit über die korrekte Funktionsweise des Systems einher. Besonders Fahrer, die eine manuelle Steuerung des Fahrzeugs gewohnt sind, fühlen sich der automatischen Steuerung ausgeliefert und daher unsicher. Ein wesentlicher Grund hierfür besteht darin, dass ein großer Teil der ablaufenden Steuerprozesse für den Nutzer unsichtbar und schwer nachvollziehbar ablaufen.

Bei dem in der DE 10 2015 210 887 A1 beschriebenen Verfahren zum Anzeigen einer Beschleunigung in einem Fahrzeug wird die Beschleunigung erfasst und eine Beleuchtung wird im Fahrzeuginnenraum so erzeugt, dass ein Beleuchtungsparameter zur Ausgabe der erfassten Beschleunigung genutzt wird. Dabei wird insbesondere ein Lauflicht verwendet.

Die DE 10 2014 216 105 A1 beschreibt ein Lenkrad eines Kraftfahrzeugs, welches sich bei einer autonomen Kurvenfahrt nicht dreht und durch eine im Lenkradkranz vorgesehene Skalenanzeige einen Hinweis hinsichtlich des Fahrzeug-Lenkwinkels ausgibt. Ferner wird der Lenkwinkel je nach der Geschwindigkeit des Fahrzeugs überhöht oder verringert wiedergegeben.

Die WO 2015/049254 A2 betrifft ein Verfahren für ein Fahrerassistenzsystem eines Fahrzeugs, bei dem eine Autopilotfunktion des Fahrassistenzsystems aktiviert und deaktiviert werden kann. Hierfür kann der Fahrer das Lenkrad des Fahrzeugs von sich wegbewegen oder zu sich hinziehen. Diese Bewegungen des Lenkrads werden erfasst und zur Aktivierung bzw. Deaktivierung der Autopilotfunktion verwendet.

Die US 2016/375925 A1 beschreibt schließlich eine Lenkungsanordnung mit einem Lenkrad, einem Lenkgetriebe und einer Sensoranordnung. Das Lenkrad ist mit einer Lenksäule verbunden, wobei das Lenkrad und die Lenksäule zwischen einer ausgefahrenen Position und einer eingefahrenen Position beweglich sind. Die ausgefahrene Position entspricht einer Position, in der ein Fahrer des Fahrzeugs eine Lenkeingabe über das Lenkrad machen kann, wohingegen die eingefahrene Position einer Position entspricht, in der der Fahrer des Fahrzeugs keine Lenkeingabe über das Lenkrad machen muss. In diesem Fall ist ein autonomes fahrunterstützendes Lenksystem aktiviert.

Der vorliegenden Erfindung liegt die Aufgabe zugrunde, ein Verfahren und ein Fahrzeug der eingangs genannten Art bereitzustellen, die eine automatisierte Fahrt ermöglichen, während gleichzeitig Informationen über die Arbeitsweise und Funktion der automatisierten Lenkung auf schnell und intuitiv erfassbare Weise ausgegeben werden.

Erfindungsgemäß wird diese Aufgabe durch ein Verfahren mit den Merkmalen des Anspruchs 1 und ein Fahrzeug mit den Merkmalen des Anspruchs 10 gelöst. Vorteilhafte Ausgestaltungen und Weiterbildungen ergeben sich aus den abhängigen Ansprüchen.

Bei dem erfindungsgemäßen Verfahren der eingangs genannten Art wird ein Lenkwinkel für eine Lenkvorrichtung des Fahrzeugs automatisch bestimmt und durch die Lenkvorrichtung umgesetzt. Dabei wird anhand des automatisch bestimmten Lenkwinkels ein Wert eines Ausgabeparameters ermittelt und der Wert des Ausgabeparameters wird durch eine Ausgabevorrichtung mittels eines Lichteffekts ausgegeben.

Dadurch kann vorteilhafterweise eine leicht wahrnehmbare Rückmeldung für eine automatische Funktion der Lenkung des Fahrzeugs ausgegeben werden.

Unter "Lenken" wird im Sinne der Erfindung eine Steuerung der Bewegung des Fahrzeugs in Querrichtung bezeichnet, das heißt, ein Führen des Fahrzeugs in eine Richtung quer zur Fahrtrichtung, insbesondere nach rechts oder links. Dabei wird mittels einer Lenkvorrichtung des Fahrzeugs insbesondere ein Winkel der Achse der Räder relativ zu der Längsachse des Fahrzeuge gesteuert, wobei ferner die Fahrtrichtung eingestellt wird. Hierzu ist es gebräuchlich, ein Lenkrad als Eingabevorrichtung vorzusehen, das gedreht werden kann und anhand dessen Stellung ein bestimmter Lenkwinkel der Räder eingestellt wird. Dies kann mittels einer mechanischen Kopplung zwischen dem drehbar gelagerten Lenkrad und der Lenkvorrichtung des Fahrzeugs oder mittels einer andere Koppelung erfolgen. Beispielsweise können anhand einer Drehung des Lenkrads Steuersignale für Elektromotoren erzeugt werden, welche dann eine entsprechende Einstellung des Winkels der Räder bewirken. Ferner kann die Eingabe des Lenkwinkels auf andere Weise erfolgen, etwa mittels eines Joysticks oder Steuerknüppels.

Bei einem automatischen Lenken des Fahrzeugs wird der gewünschte Lenkwinkel berechnet und durch die Lenkvorrichtung umgesetzt. Dies geschieht automatisch auf an sich bekannte Weise, das heißt ohne eine konkrete Vorgabe des Lenkwinkels durch einen Nutzer. Beispielsweise können Sensoren des Fahrzeugs Daten über die Umgebung erfassen und anhand dieser Daten kann der Lenkwinkel bestimmt werden, etwa um das Fahrzeug entlang einer bestimmten Fahrspur zu führen. Der so bestimmte Lenkwinkel kann dann durch die Lenkvorrichtung umgesetzt werden. Ferner kann vorgesehen sein, dass der Lenkwinkel anhand von Sensoren bestimmt wird, welche die Stellung der Räder des Fahrzeugs relativ zur Fahrzeuglängsachse erfassen. Je nach der verwendeten Lenkvorrichtung können dabei unterschiedliche Winkel für die Räder vorgesehen sein, wobei ein Wert eines gemeinsamen bestimmten Lenkwinkel bestimmt wird. Alternativ oder zusätzlich kann vorgesehen sein, dass eine Beschleunigung, insbesondere eine Querbeschleunigung des Fahrzeugs bestimmt und bei der Bestimmung des Werts des Ausgabeparameters berücksichtigt wird.

Die Umsetzung des Lenkwinkel durch die Lenkvorrichtung erfolgt ebenfalls auf an sich bekannte Weise, wobei verschiedene Bauweisen und Verfahren bekannt sind.

Der Ausgabeparameter kann auf unterschiedliche Weise anhand des Lenkwinkels gebildet werden. Der Wert des Ausgabeparameters kann beispielsweise den Lenkwinkel umfassen, etwa proportional dazu sein oder in linearer oder nicht-lineare Weise anhand des Lenkwinkels gebildet werden. Insbesondere umfasst der Wert des Ausgabeparameters dabei Informationen über den Betrag und/oder die Richtung des Lenkwinkels.

Bei einer Ausbildung des erfindungsgemäßen Verfahrens umfasst der Lichteffekt eine örtliche Verteilung eines Lichtparameters. Der Lichteffekt wird so auf besonders leicht wahrnehmbare Weise erzeugt.

Die Erzeugung und Ausgabe des Ausgabeparameters durch den Lichteffekt kann auf verschiedene, an sich bekannte Weise erfolgen. Als "Lichteffekt" wird im Sinne der Erfindung eine gestaltbare Lichtemission bezeichnet. Die Bildung einer solchen Lichtemission kann auf unterschiedliche Weise erfolgen, etwa mittels Leuchtdioden (LEDs, OLEDs), einer Flüssigkristallanzeige (LCD, TFT), Glühlampen, einer Projektionseinrichtung oder anderer Mittel zur Erzeugung einer Lichtemission. Ferner kann der Lichteffekt durch Mittel zur Gestaltung einer passiven Lichtemission, etwa mittels Streuung oder Reflexion, verändert werden.

Des Weiteren kann eine Vielzahl von Lichtquellen, etwa Leuchtdioden, neben- oder hintereinander angeordnet sein, wobei etwa eine Lichtlinie gebildet werden kann, insbesondere entlang einer offenen oder geschlossenen Ringfläche. Ferner kann der Lichteffekt anhand einer indirekten Lichtemission einer Oberfläche erzeugt werden, etwa indem eine oder mehrere Lichtquellen für einen typischen Betrachter verdeckt angeordnet sind und eine Oberfläche beleuchten, sodass der Betrachter nicht direkt auf die Lichtquelle oder eine davor angeordneten Mattscheibe blickt, sondern die Lichtemission anhand von Reflexion und Streuung in Richtung des Betrachters gelenkt wird. Der Lichteffekt kann zudem mittels einer Displays gebildet werden, das heißt anhand einer Matrix einzelner Bildpunkte, die als separate Lichtquellen angesteuert werden können.

Die Lichtemission wird insbesondere zeitlich veränderlich gebildet. Das heißt, die Lichtemission ist veränderbar, wobei Lichtparameter wie etwa eine Intensitätsverteilung, ein Kontrast, eine farbliche Gestaltung, eine räumliche Verteilung und/oder eine dynamische Veränderung in Abhängigkeit von der Zeit auf unterschiedliche Weisen gebildet werden können. Die von der Zeit abhängige Veränderung kann dabei insbesondere synchronisiert mit einer Veränderung des Ausgangparameters erfolgen.

Beispielsweise kann die Ausgabevorrichtung so gebildet sein, dass ein lokales Maximum oder Minimum eines Lichtparameters an einer bestimmten Position gebildet werden kann. Ein solches lokales Extremum, etwa der Helligkeit, kann ferner so gebildet sein, dass sich seine Position mit der Zeit verändert, das heißt, dass eine Bewegung des Maximums oder Minimums dargestellt wird. Ferner kann eine Verbreiterung oder ein Zusammenziehen einer Lichtverteilung dargestellt werden, etwa indem ein Gradient in der Umgebung eines lokalen Extremums einer Lichtverteilung mit der Zeit absinkt (Verbreiterung der Verteilung an der Position des Extremums) oder ansteigt (schärfere Begrenzung des Extremums). Die Veränderung der Lichtverteilung kann dabei symmetrisch oder asymmetrisch erfolgen.

Ferner kann eine Lichtverteilung als Verteilung von Punkten oder Flecken verschiedener Größe und Helligkeit ausgebildet sein, etwa indem eine Darstellung leuchtender Partikel erzeugt wird. Dies kann ebenfalls auf an sich bekannte Weise erfolgen, beispielsweise mittels einer hinterleuchteten Mattscheibe, deren Lichtdurchlässigkeit in unterschiedlichen Bereichen unterschiedlich ausgeprägt ist. Durch Hinterleuchten mit mehreren Lichtquellen kann in diesem Fall eine Veränderung des Ortes der Helligkeitsverteilung ausgegeben werden, bei der sich Lichtpunkte zu bewegen scheinen.

Der Wert des Ausgabeparameters wird anhand des Lichteffekts ausgegeben, das heißt anhand des Lichteffekts ist eine Information über den Wert des Ausgabeparameters erfassbar. Dies kann auf unterschiedliche Weisen anhand einer geeigneten Parametrisierung des Lichteffekts erfolgen. Die Parametrisierung erfolgt dabei anhand eines Zusammenhangs zwischen dem Ausgabeparameter und dem Lichteffekt, beispielsweise indem ein Parameter des Lichteffekts proportional zu oder in linearer oder nicht-linearer Abhängigkeit von dem Wert des Ausgabeparameters gebildet wird. Der Wert des Ausgabeparameters kann alternativ oder zusätzlich ausgegeben werden, indem der Lichteffekt eine Geschwindigkeit einer Änderung der Lichtverteilung umfasst, etwa eine Geschwindigkeit einer Bewegung eines lokalen Maximums der Lichtverteilung.

Bei einer Ausgestaltung der Erfindung weist der Lichteffekt einen Darstellungswinkel auf und der Wert des Ausgabeparameters wird anhand des Darstellungswinkels ausgegeben. Beispielsweise kann der Darstellungswinkel in einem funktionellen Zusammenhang zu dem Lenkwinkel stehen. Beispielsweise weist der Lichteffekt ein Intensitätsmaximum bei dem Darstellungswinkel auf, welcher sich entsprechend dem Lenkwinkel verändert. Indem ein Darstellungswinkel als Parameter des Lichteffekts verwendet wird, kann vorteilhafterweise eine besonders einfache und intuitive gedankliche Verknüpfung mit dem Lenkwinkel beim Lenkvorgang hergestellt werden.

Der Lichteffekt kann beispielsweise so erzeugt werden, dass seine Position anhand des Darstellungswinkels parametrisierbar ist. Er kann beispielsweise ein Position eines lokalen Extremum seiner Lichtverteilung entlang einer ringförmig verlaufenden Lichtlinie oder einer ringförmig angeordneten Reihe von Lichtquellen aufweisen, wobei die Position anhand eines Winkels ausgehend von einem Mittelpunkt des Rings parametrisiert sein kann.

Ferner kann eine zeitliche Veränderung des Darstellungswinkels als Parameter des Lichteffekts zur Ausgabe des Wertes des Ausgabeparameters verwendet werden, beispielsweise indem eine umso schnellere Veränderung des Darstellungswinkels angezeigt wird, je größer der Lenkwinkel relativ zur Längsachse des Fahrzeugs ist.

Gemäß einer anderen Ausgestaltung des erfindungsgemäßen Verfahrens umfasst der Lichteffekt keine Veränderung der örtlichen Verteilung eines Lichtparameters, sondern eine andere Änderung des Lichtparameters. Beispielsweise kann sich die Helligkeit, die Farbe und/oder ein anderer statischer Lichtparameter in Abhängigkeit von dem Wert des Ausgabeparameters verändern. Eine Vergrößerung des Lenkwinkels wird in diesem Fall durch eine größere Helligkeit bei der Lichtemission und/oder einer anderen Farbe der Lichtemission dargestellt. Beispielsweise kann ein Lenkwinkel von null Grad durch eine blaue Lichtemission dargestellt werden. Je weiter der Lenkwinkel vergrößert wird, desto weiter verschiebt sich das Spektrum der Lichtemission in Richtung einer roten Lichtemission. Alternativ oder zusätzlich kann bei einem Lenkwinkel von null Grad nur Licht mit sehr geringer Intensität emittiert werden. Vergrößert sich der Lenkwinkel, wird die Lichtintensität der Lichtemission entsprechend der Vergrößerung des Lenkwinkels gesteigert.

Gemäß einer weiteren Ausgestaltung kann der Lichteffekt ein Blinklicht sein, wobei die Blinkfrequenz vom Lenkwinkel abhängt.

Erfindungsgemäß ist ferner ein manueller Betriebsmodus aktivierbar, wobei, wenn der manuelle Betriebsmodus aktiviert ist, ein tatsächlicher Verstellungsgrad einer Eingabevorrichtung als Lenkwinkel der Lenkvorrichtung umgesetzt wird. Dadurch wird eine intuitive manuelle Bedienung der Steuerung ermöglicht. Insbesondere stehen der tatsächliche Verstellungsgrad und der Lenkwinkel in einem proportionalen, einem linearen oder einem nicht-linearen Verhältnis zueinander.

Die Eingabevorrichtung kann dabei mechanisch verstellt werden, wobei insbesondere eine Verstellung um einen Freiheitsgrad vorgesehen ist. Der Verstellungsgrad ist dabei je nach der Art der Eingabevorrichtung gebildet. Bei einer Ausführung der Eingabevorrichtung als Lenkrad ist der Verstellungsgrad ein Drehwinkel, während bei einem Joystick oder Steuerknüppel eine Auslenkung des Bedienelements in eine bestimmte Richtung als Verstellungsgrad erfasst wird.

Beispielsweise wird, um den Verstellungsgrad eines Lenkrads als Lenkwinkel der Lenkvorrichtung umzusetzen, eine Transformation durchgeführt, durch die dem Drehwinkel des Lenkrads eine Stellung der Räder gegenüber der Längsachse des Fahrzeugs zugeordnet wird.

Bei einer Ausbildung ist die Ausgabevorrichtung an der Eingabevorrichtung angeordnet. Insbesondere ist die Ausgabevorrichtung fest mit der Eingabevorrichtung verbunden. Ferner kann die Ausgabevorrichtung an einem Element der Eingabevorrichtung angeordnet sein, welches sich bei einer Einstellung des tatsächlichen Verstellungsgrades der Eingabevorrichtung bewegt.

Beispielsweise ist die Ausgabevorrichtung an einem Lenkrad angebracht oder in das Lenkrad integriert. Beispielsweise kann die Ausgabevorrichtung als umlaufende Lichtlinie am Rand des Lenkrads oder als zumindest teilweise geschlossener Ring ausgebildet sein. Zudem kann die Ausgabevorrichtung in diesem Beispiel als Display auf dem Lenkrad, das heißt auf der dem Fahrer des Fahrzeugs zugewandten Seite des Lenkrads, angeordnet sein.

Bei einer weiteren Ausbildung wird, wenn der automatische Betriebsmodus aktiviert ist, anhand des bestimmten Lenkwinkels ein berechneter Verstellungsgrad bestimmt, wobei bestimmt wird, welchem tatsächlichen Verstellungsgrad der automatisch bestimmte Lenkwinkel entspricht. Dadurch kann vorteilhafterweise eine Ausgabe durch den Lichteffekt so erfolgen, dass eine tatsächliche Verstellung der Eingabevorrichtung dargestellt wird.

Bei einer Weiterbildung wird durch den Lichteffekt der berechnete Verstellungsgrad ausgegeben. Dadurch wird vorteilhafterweise eine besonders leicht verständliche Ausgabe eines Zusammenhangs zwischen dem Verstellungsgrad und dem Wertes Ausgabeparameters erreicht.

Bei einer weiteren Ausbildung umfasst der tatsächliche Verstellungsgrad einen Drehwinkel. Die Darstellung des Ausgabeparameters kann dadurch besonders einfach mittels des Darstellungswinkels des Lichteffekts erfolgen.

Ist beispielsweise die Eingabevorrichtung ein Lenkrad, so entspricht der Verstellungsgrad einem Drehwinkel des Lenkrads. Im manuellen Modus wird der tatsächliche Verstellungsgrad, das heißt der tatsächliche Drehwinkel des Lenkrads, als Lenkwinkel umgesetzt. Im automatischen Modus kann dieser Prozess umgekehrt erfolgen, das heißt, der tatsächliche Verstellungsgrad kann in Abhängigkeit von dem automatisch bestimmten Lenkwinkel gebildet werden, beispielsweise wird das Lenkrad mit dem Lenkwinkel mitgedreht. Auf diese Weise wird den Fahrzeuginsassen signalisiert, welche Eingriffe durch die automatische Steuerung vorgenommen werden, etwa indem das Lenkrad umso stärker gedreht wird, je größer der Lenkwinkel ist.

Bei dem automatischen Betriebsmodus kann ferner die Bewegung des Lenkrads vom tatsächlichen Lenkwinkel der Lenkvorrichtung abgekoppelt werden, insbesondere indem sich das Lenkrad nicht in Abhängigkeit von dem Lenkwinkel bewegt. Das Lenkrad kann beispielsweise in einer neutralen Position verharren. Durch das erfindungsgemäße Verfahren kann nun statt einer tatsächlichen Änderung des Verstellungsgrades der Wert des Ausgabeparameters, insbesondere ein Maß für den Lenkwinkel, durch den Lichteffekt ausgegeben werden.

Beispielsweise kann vorgesehen sein, dass in dem automatischen Betriebsmodus ein Lenkrad in einer bestimmten Position und bei einem bestimmten, insbesondere einem neutralen Verstellungsgrad verharrt, während durch eine an dem Lenkrad angeordnete Ausgabevorrichtung der Wert des Ausgabeparameters ausgegeben wird. Der neutrale Verstellungsgrad bezeichnet dabei insbesondere den Verstellungsgrad, bei dem im manuellen Betriebsmodus eine Geradeausfahrt durchgeführt würde. Beispielsweise kann der Lichteffekt so erzeugt werden, dass ein lokales Extremum eine Lichtverteilung relativ zu einer Achse des Lenkrads bei einem Winkel erzeugt wird, welcher in Abhängigkeit von dem Lenkwinkel gebildet wird.

Insbesondere wird dabei bestimmt, wie die Eingabevorrichtung verstellt werden müsste, das heißt beispielsweise, um welchen Drehwinkel das Lenkrad gedreht werden müsste, um den berechneten Lenkwinkel zu erzeugen. Es wird also etwa bestimmt, wie weit das Lenkrad gedreht werden müsste, um im manuellen Betriebsmodus den gleichen Lenkwinkel zu erreichen wie aktuell im automatischen Betriebsmodus bestimmt. Dieser Drehwinkel wird dann anhand des Wertes des Ausgabeparameters mittels des Lichteffekts ausgegeben.

Bei einer Weiterbildung ist die Eingabevorrichtung, wenn der automatische Betriebsmodus aktiviert ist, zwischen einer Ruheposition und einer Bedienposition verschiebbar. Insbesondere kann die Verschiebung bei einem Übergang zwischen dem automatischen und dem manuellen Betriebsmodus erfolgen. Dadurch kann vorteilhafterweise bei dem automatischen Betriebsmodus eine besonders effiziente Nutzung des Fahrzeugs ermöglicht werden.

Beispielsweise kann ein Lenkrad, wenn der automatische Betriebsmodus aktiviert ist, in eine Ruheposition verschoben werden, in welcher es weniger Platz im Innenraum des Fahrzeugs einnimmt. Ferner kann es umgekehrt beim Wechsel in den manuellen Betriebsmodus an eine Bedienposition verfahren werden. In der Ruheposition kann das Lenkrad beispielsweise einrasten und/oder genutzt werden, um beispielsweise Gegenstände darauf abzulegen oder daran zu befestigen, etwa ein Mobiltelefon oder einen Tablet-PC. Zudem kann im Ruhemodus mehr Platz für Bewegungen des Fahrers zur Verfügung stehen, während die Eingabevorrichtung im Bedienmodus mehr Platz einnimmt.

Bei einer Ausbildung wird eine Bedienhandlung erfasst und die Eingabevorrichtung wird in Abhängigkeit von der erfassten Bedienhandlung verschoben. Dadurch kann vorteilhafterweise die Verschiebung der Eingabevorrichtung zwischen der Ruheposition und der Bedienposition besonders einfach durch den Nutzer veranlasst werden.

Beispielsweise kann vorgesehen sein, dass die Bedienhandlung ein Betätigen eines bestimmten Bedienelements umfasst, etwa ein Antippen eines Schaltelements oder ein Betätigen eines Schalters. Dabei kann zudem vorgesehen sein, dass anhand der Bedienhandlung ein Übergang von dem manuellen in den automatischen Betriebsmodus oder von dem automatischen in den manuellen Betriebsmodus erzeugt wird.

Erfindungsgemäß wird bei einem Wechsel zwischen dem automatischen und dem manuellen Betriebsmodus eine Übergangsanimation erzeugt und durch die Ausgabevorrichtung ausgegeben. Dadurch wird vorteilhafterweise leicht erfassbar dargestellt, dass ein Wechsel zwischen den Betriebsmodi vorgenommen wird. Erfindungsgemäß wird die Übergangsanimation bei dem Wechsel zwischen den Betriebsmodi so erzeugt, dass ein Lichteffekt ausgehend von der Position, an welcher die Hand des Nutzers die Lenkvorrichtung berührt oder zuletzt berührt hat, sich ausbreitet oder an dieser Position zusammengezogen wird.

Die Übergangsanimation kann auf unterschiedliche Weise ausgebildet sein. Beispielsweise kann die Übergangsanimation eine Änderung der Lichtverteilung der Ausgabevorrichtung umfassen, bei welcher ein Übergang von einer Lichtverteilung im manuellen Betriebsmodus zu einer Verteilung mit dem erfindungsgemäßen Lichteffekt ausgegeben wird. Beispielsweise kann eine Ausbreitung eines Lichtimpulses von einer bestimmten Position über die gesamte Ausgabevorrichtung angezeigt werden.

Bei einer Weiterbildung wird eine Annäherung eines Nutzers an die Eingabevorrichtung erfasst und der automatische oder der manuelle Betriebsmodus wird in Abhängigkeit von der erfassten Annäherung aktiviert. Der Wechsel zwischen den Betriebsmodi kann so vorteilhafterweise besonders einfach vorgenommen werden.

Beispielsweise kann der manuelle Betriebsmodus aktiviert werden, wenn ein Nutzer die Eingabevorrichtung, das heißt insbesondere das Lenkrad, berührt, sich ihr annähert und/oder danach greift. Umgekehrt kann der automatische Betriebsmodus aktiviert werden, wenn ein Nutzer sich von der Eingabevorrichtung entfernt, das heißt insbesondere wenn der Nutzer das Lenkrad loslässt und/oder sich von dem Lenkrad entfernt.

Die Detektion der Annäherung erfolgt auf an sich bekannte Weise, beispielsweise anhand einer kapazitiven Sensorik, anhand einer Detektionsstrahlung, die etwa von einer Hand des Nutzers reflektiert wird oder mittels anderer Verfahren. Dabei kann erfasst werden, ob und in welcher Weise die Eingabevorrichtung berührt wird oder ob und in welchem räumlichen Bereich sich der Nutzer in der Umgebung der Eingabevorrichtung befindet.

Dabei kann ferner berücksichtigt werden, an welcher Position der Nutzer, das heißt insbesondere eine Hand des Nutzers, relativ zu der Eingabevorrichtung detektiert wird.

Diese Weiterbildung der Erfindung ermöglicht einen automatischen Übergang von dem manuellen in den automatischen Betriebsmodus, wenn der Fahrer die Eingabevorrichtung loslässt und/oder sich von ihr entfernt. Umgekehrt kann automatisch der manuelle Betriebsmodus aktiviert werden und der Nutzer kann die manuelle Steuerung wieder übernehmen, indem er sich an die Eingabevorrichtung annähert beziehungsweise diese berührt.

Insbesondere kann vorgesehen sein, dass bei dem manuellen Betriebsmodus keine oder eine gleichmäßige Lichtverteilung durch die Ausgabevorrichtung erzeugt wird und dass bei dem Übergang in den automatischen Betriebsmodus eine durch den Lichteffekt ungleichmäßige Lichtverteilung erzeugt wird. Die Übergangsanimation kann in diesem Fall einen Übergang zu der ungleichmäßigen Lichtverteilung des automatischen Betriebsmodus umfassen.

Die Übergangsanimation kann ferner weitere Mittel zur Erzeugung einer Lichtverteilung im Fahrzeug umfassen, insbesondere eine Einrichtung zur Erzeugung einer Innenraumbeleuchtung. Diese kann zum Beispiel eine Lichtleiste umfassen, welche im Innenraum des Fahrzeugs, etwa im Bereich des Armaturenbretts und/oder seitlich im Fahrzeug, angeordnet ist. Bei einem weiteren Beispiel kann vorgesehen sein, dass durch die Lichtleisten ferner Informationen über eine Beschleunigung des Fahrzeugs, insbesondere über eine Querbeschleunigung des Fahrzeugs, ausgegeben werden. Dies kann die Ausgabe des Werts des Ausgabeparameters, welcher in Abhängigkeit von dem Lenkwinkel gebildet wird, unterstützen, da durch die Einstellung des Lenkwinkels der Lenkvorrichtung beim Fahren einer Kurve die auf das Fahrzeug wirkende Querbeschleunigung verändert wird.

Das erfindungsgemäße Fahrzeug mit einem automatischen Betriebsmodus umfasst eine Steuereinheit, durch die ein Lenkwinkel für eine Lenkvorrichtung des Fahrzeugs automatisch bestimmbar ist, wobei der Lenkwinkel durch die Lenkvorrichtung umsetzbar ist, sowie eine Ermittlungseinheit, durch die anhand des automatisch bestimmten Lenkwinkels ein Wert eines Ausgabeparameters ermittelbar ist. Es umfasst zudem eine Ausgabevorrichtung, durch die der Wert des Ausgabeparameters mittels eines Lichteffekts ausgebbar ist und ferner ein manueller Betriebsmodus aktivierbar ist. Das Fahrzeug umfasst ferner eine Eingabevorrichtung, wobei, wenn der manuelle Betriebsmodus aktiviert ist, ein tatsächlicher Verstellungsgrad der Eingabevorrichtung als Lenkwinkel der Lenkvorrichtung umsetzbar ist und bei einem Wechsel zwischen dem automatischen und dem manuellen Betriebsmodus eine Übergangsanimation erzeugbar und durch die Ausgabevorrichtung ausgebbar ist. Die Übergangsanimation ist bei dem Wechsel zwischen den Betriebsmodi so erzeugbar, dass ein Lichteffekt ausgehend von der Position, an welcher die Hand des Nutzers die Lenkvorrichtung berührt oder zuletzt berührt hat, sich ausbreitet oder an dieser Position zusammengezogen wird.

Das erfindungsgemäße Fahrzeug ist insbesondere ausgebildet, das vorstehend beschriebene erfindungsgemäße Verfahren zu implementieren. Das Fahrzeug weist somit dieselben Vorteile auf wie das erfindungsgemäße Verfahren.

Bei einer Ausbildung des erfindungsgemäßen Fahrzeugs umfasst die Ausgabevorrichtung mehrere benachbart zueinander angeordnete Lichtquellen, wobei die Lichtquellen zum Erzeugen des Lichteffekts Licht emittieren. Dabei wird der Lichteffekt dadurch erzeugt, dass ein Lichtparameter des von den Lichtquellen emittierten Lichts von einzelnen benachbart zueinander angeordneten Lichtquellen oder von Gruppen von Lichtquellen, die benachbart zueinander angeordneten sind, nacheinander verändert wird. Dies erlaubt vorteilhafterweise eine Ausbildung der Ausgabevorrichtung als Lauflicht und/oder mittels einer Lichtverteilung entlang einer Reihe benachbarter Lichtquellen.

Bei einer weiteren Ausbildung ist ferner ein manueller Betriebsmodus aktivierbar und das Fahrzeug umfasst ferner eine Eingabevorrichtung. Dabei ist, wenn der manuelle Betriebsmodus aktiviert ist, ein tatsächlicher Verstellungsgrad der Eingabevorrichtung als Lenkwinkel der Lenkvorrichtung umsetzbar. Die Eingabevorrichtung ist vorteilhafterweise als Lenkrad ausgeführt, wobei der tatsächliche Verstellungsgrad anhand eines Drehwinkels des Lenkrads bestimmbar ist.

Bei einer Weiterbildung ist die Ausgabevorrichtung an der Eingabevorrichtung angeordnet. Insbesondere ist die Ausgabevorrichtung direkt an oder auf einer Fläche der Eingabevorrichtung angeordnet, welche sich bewegt, wenn der tatsächliche Verstellungsgrad der Eingabevorrichtung geändert wird. Die Ausgabevorrichtung ist beispielsweise an einem Lenkrad angeordnet oder mit diesem mechanisch verbunden.

Bei einer weiteren Ausbildung weist die Eingabevorrichtung eine Annäherungserfassungseinrichtung auf, durch die eine Annäherung eines Nutzers an die Eingabevorrichtung erfassbar ist, und der automatische oder der manuelle Betriebsmodus in Abhängigkeit von der erfassten Annäherung aktivierbar ist. Insbesondere kann dabei eine Position des Nutzers, insbesondere einer Hand des Nutzers, relativ zu der Eingabevorrichtung bestimmt werden. Dies ermöglicht es, einen automatischen Übergang zwischen einem manuellen und dem automatischen Betriebsmodus zu implementieren.

Die Erfindung wird nun anhand von Ausführungsbeispielen mit Bezug zu den Zeichnungen erläutert.
Figur 1 zeigt ein Ausführungsbeispiel des erfindungsgemäßen Fahrzeugs,
Figuren 2A bis 2C zeigen ein erstes Ausführungsbeispiel des erfindungsgemäßen Verfahrens und
Figuren 3 bis 14 zeigen ein zweites Ausführungsbeispiel des erfindungsgemäßen Verfahrens.

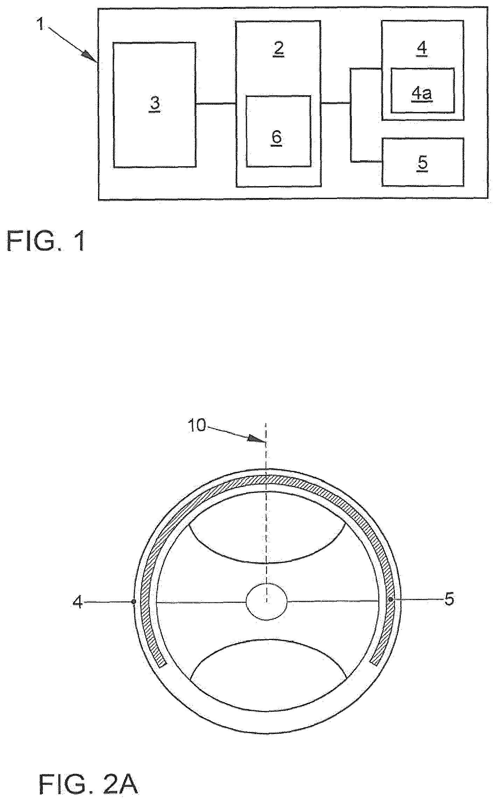

Mit Bezug zu Figur 1 wird ein Ausführungsbeispiel des erfindungsgemäßen Fahrzeugs erläutert.

Ein Fahrzeug 1 umfasst eine Steuereinheit 2, die ihrerseits eine Ermittlungseinheit 6 umfasst. Mit der Steuereinheit 2 sind eine Lenkvorrichtung 3, eine Eingabevorrichtung 4, im dargestellten Ausführungsbeispiel ein Lenkrad 4, und eine Ausgabevorrichtung 5, bei dem dargestellten Ausführungsbeispiel ein Leuchtstreifen 5, gekoppelt.

Der Leuchtstreifen 5 ist bei dem Ausführungsbeispiel an dem Lenkrad 4 angeordnet, insbesondere verläuft er im Wesentlichen parallel zum Umfang des Lenkrads 4 in einer offenen Ringform. Ferner umfasst das Lenkrad 4 bei dem Ausführungsbeispiel eine Annäherungserfassungseinheit 4a, durch die erfassbar ist, ob und an welcher Position sich ein Nutzer, insbesondere eine Hand eines Nutzers, an das Lenkrad 4 annähert und/oder ob und an welcher Position ein Nutzer das Lenkrad 4 berührt.

In weiteren Ausführungsbeispielen ist der Leuchtstreifen 5 als vollständig umlaufender Ring parallel zum Umfang des Lenkrads 4 ausgebildet. Ferner kann der Leuchtstreifen als Display, mittels LCD oder Glühlampen oder auf andere Weisen ausgebildet sein.

Das Fahrzeug 1 kann erfindungsgemäß in einem automatischen Betriebsmodus betrieben werden. Ferner ist in dem Ausführungsbeispiel ein manueller Betriebsmodus aktivierbar. Die Aktivierung der verschiedenen Betriebsmodi erfolgt dabei auf an sich bekannte Weise, insbesondere anhand einer Nutzereingabe oder automatisch.

Wenn der manuelle Betriebsmodus aktiviert ist, kann ein Nutzer, insbesondere der Fahrer des Fahrzeugs 1, durch eine Eingabe mittels der Eingabevorrichtung 4, das heißt des Lenkrads 4, einen Lenkwinkel eingeben, der durch die Lenkvorrichtung 3 des Fahrzeugs 1 umgesetzt wird.

Bei der Umsetzung des Lenkwinkels werden Räder des Fahrzeugs 1 durch die Lenkvorrichtung 3 so eingestellt, dass ihre Achsen einen bestimmten Winkel relativ zu einer Längsachse des Fahrzeugs 1 aufweisen, sodass die Quersteuerung des Fahrzeugs 1 eingestellt werden kann. Insbesondere kann auf diese Weise die Fahrtrichtung des Fahrzeugs 1 verändert werden.

Wenn der automatische Betriebsmodus aktiviert ist, wird der Lenkwinkel automatisch bestimmt. Dies erfolgt auf an sich bekannte Weise, beispielsweise anhand von Daten, welche durch Sensoren des Fahrzeugs 1 erfasst werden und durch die Steuereinheit 2 so verarbeitet werden, dass eine Zieltrajektorie des Fahrzeugs 1 bestimmt wird und der Lenkwinkel zur Erreichung der Zieltrajektorie berechnet wird. Die Quersteuerung des Fahrzeugs 1 erfolgt in diesem Fall automatisch.

Ferner können weitere Betriebsmodi vorgesehen sein, welche eine zumindest teilweise automatische Steuerung vorsehen, beispielsweise einen Spurhalteassistenten, der lediglich dann in die Quersteuerung des Fahrzeugs 1 eingreift, wenn das Fahrzeug 1 eine vorgegebene Fahrspur zu verlassen droht, oder einen Überholassistenten, welcher den Fahrer des Fahrzeugs 1 bei Überholvorgängen unterstützt.

Mit Bezug zu den Figuren 1 sowie 2A bis 2C wird ein erstes Ausführungsbeispiel des erfindungsgemäßen Verfahrens erläutert. Dabei wird insbesondere von dem oben mit Bezug zu Figur 1 erläuterten Ausführungsbeispiel des erfindungsgemäßen Fahrzeugs ausgegangen.

Bei dem Verfahren wird in dem automatischen Betriebsmodus des Fahrzeugs 1 ein Lenkwinkel für die Lenkvorrichtung 3 des Fahrzeugs 1 automatisch bestimmt und durch die Lenkvorrichtung 3 umgesetzt. Anhand des Lenkwinkels wird ein Wert eines Ausgabeparameters ermittelt, welcher dann durch eine Ausgabevorrichtung 5, bei dem Beispiel durch den Leuchtstreifen 5, ausgegeben wird. Zur Ausgabe des Werts des Ausgabeparameters wird ein Lichteffekt 7 erzeugt. Der Wert des Ausgabeparameters kann dabei anhand verschiedener Größen gebildet werden. Insbesondere umfasst er ein Maß für den bestimmten Lenkwinkel. Beispielsweise kann der Wert proportional zu dem Lenkwinkel sein oder eine lineare oder nicht-lineare Abhängigkeit von dem Lenkwinkel aufweisen.

Figur 2A zeigt ein Lenkrad 4, welches nach an sich bekannter Art einen kreisförmigen Umfang aufweist und um den Mittelpunkt der Kreisform drehbar gelagert ist. Eine Drehung des Lenkrads 4 wird durch einen Verstellungsgrad charakterisiert, der einem Drehwinkel α des Lenkrads 4 entspricht. Bei dem in Figur 2A dargestellten Fall befindet sich das Lenkrad in einer neutralen Position 10, entsprechend einem Drehwinkel α von 0.

Ferner ist an dem Lenkrad 4 ein Leuchtstreifen 5 angeordnet. Bei dem Ausführungsbeispiel ist der Leuchtstreifen 5 in das Lenkrad 4 integriert, das heißt, bei einer Drehung des Lenkrads 4 dreht sich auch der Leuchtstreifen 5 im gleichen Maße mit. Bei dem Ausführungsbeispiel umfasst der Leuchtstreifen 5 in einer Reihe angeordnete Leuchtdioden (LEDs, OLEDs), über denen eine Diffusorschicht angeordnet ist. Ein Betrachter, der auf die Oberfläche des Leuchtstreifen 5 blickt, kann somit die von den einzelnen Leuchtdioden des Leuchtschreibens 5 erzeugten Lichtemissionen nicht einzeln und direkt sehen, sondern die Lichtemission wird durch die Diffusorschicht gestreut. Die einzelnen Leuchtdioden sind auf diese Weise nicht direkt sichtbar, sondern es wird ein leuchtender Streifen gebildet, wobei die räumliche Verteilung der Lichtemission entlang des Leuchtstreifen 5 auf unterschiedliche, an sich bekannte Weisen gestaltet werden kann.

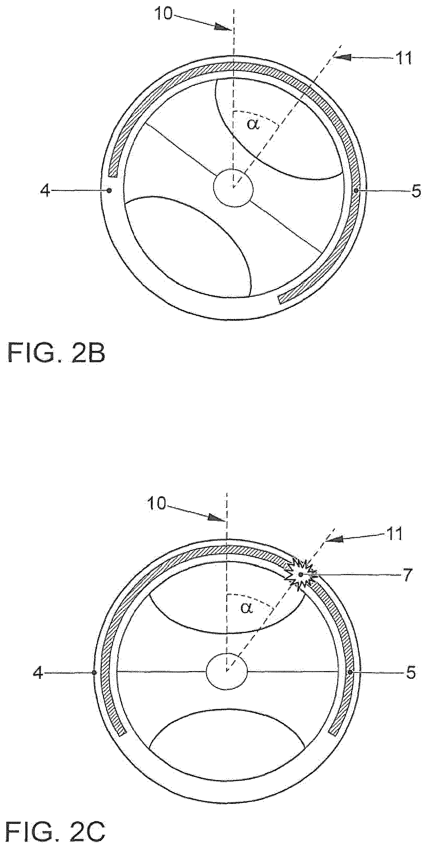

Bei dem in Figur 2B dargestellten Fall ist das Lenkrad 4 um den Drehwinkel α gedreht dargestellt. Als Drehwinkel α wird bei dem Ausführungsbeispiel der Winkel bezeichnet, den eine Symmetrieachse des Lenkrads 4 in der neutralen Position 10 mit der Symmetrieachse des gedrehten Lenkrads 4 in der eingeschlagenen Position 11 einschließt.

Ist der manuelle Betriebsmodus aktiviert, so erfolgt die Drehung des Lenkrads 4 manuell durch den Fahrer des Fahrzeugs 1. Der Fahrer bestimmt daher durch Drehen des Lenkrads 4 den Lenkwinkel und dadurch die Quersteuerung des Fahrzeugs 1. Ist dagegen der automatische Betriebsmodus aktiviert, so wird der Lenkwinkel automatisch bestimmt und durch die Lenkvorrichtung 3 des Fahrzeugs 1 umgesetzt. Die Drehung des Lenkrads 4 um den Winkel α wird in diesem Fall automatisch, insbesondere mittels eines Motors, ausgeführt und dient als Rückmeldung für den Nutzer des Fahrzeugs 1.

Insbesondere wird in dem automatischen Betriebsmodus zunächst der Lenkwinkel bestimmt und anschließend berechnet, welchem Drehwinkel α des Lenkrads 4 dieser Lenkwinkel entspricht. Das Lenkrad 4 wird anschließend um diesen berechneten Drehwinkel α gedreht. In weiteren Ausführungsbeispielen kann vorgesehen sein, dass die automatische Drehung des Lenkrads um einen Drehwinkel α in anderer Weise erfolgt, beispielsweise indem im automatischen Betriebsmodus eine geringere oder stärkere Drehung des Lenkrads 4 erzeugt wird als dies im manuellen Betriebsmodus bei einer manuellen Drehung der Fall wäre.

Bei dem in Figur 2C dargestellten Fall ist der automatische Betriebsmodus des Fahrzeugs 1 aktiviert und die Quersteuerung des Fahrzeugs 1 erfolgt anhand eines berechneten Lenkwinkels. Anhand dieses Lenkwinkels wird der Drehwinkel α für das Lenkrad 4 berechnet. Anders als bei dem in Figur 2B dargestellten Fall wird allerdings nicht das Lenkrad 4 gedreht, sondern es wird ein Lichteffekt 7 erzeugt, durch den der Drehwinkel α ausgegeben wird. Dies erfolgt dadurch, dass der Lichteffekt 7 an einer bestimmten Position entlang des Leuchtstreifens 5 erzeugt wird, wobei diese Position so bestimmt wird, dass sie einer Auslenkung um den Drehwinkel α ausgehend von der neutralen Position 10 entspricht. Das heißt, der Lichteffekt 7 weist einen Darstellungswinkel auf, der dem (berechneten) Drehwinkel α entspricht. Insbesondere entspricht die Position des Lichteffekts 7 auf dem Leuchtstreifen 5 des Lenkrads 4 dem Schnittpunkt zwischen dem Verlauf des Leuchtstreifens 5 und einer Linie, die der hypothetischen Symmetrieachse des Lenkrads 4 bei einer Drehung um den berechneten Drehwinkel α entspricht.

Der Lichteffekt 7 wird auf an sich bekannte Weise erzeugt. Beispielsweise wird entlang des Leuchtstreifens 5 eine Lichtverteilung erzeugt, wobei die Lichtverteilung eine ungleichmäßige Lichtemission entlang der Ausdehnungsrichtung des Schreibens 5 aufweist. Die Lichtverteilung betrifft beispielsweise die Intensität, die Farbe oder einen anderen Parameter der Lichtemission. Ferner kann die Lichtverteilung einen dynamischen Parameter betreffen, beispielsweise eine Blinkgeschwindigkeit oder eine periodische Veränderung eines anderen Lichtparameters. Die Lichtverteilung wird dabei so erzeugt, dass eine bestimmte Position eines Lichteffekts 7 erfassbar ist. Eine solche Position kann beispielsweise anhand eines lokalen Extremums der Lichtverteilung für einen bestimmten Lichtparameter erfassbar sein, beispielsweise anhand eines lokalen Helligkeitsmaximums oder -minimums. In weiteren Ausführungsbeispielen können mehrere Positionen des Lichteffekts 7 erfassbar sein, beispielsweise durch eine Erzeugung mehrerer lokaler Extrema oder durch eine Darstellung mehrerer Lichtpunkte.

In weiteren Ausführungsbeispielen kann die Position, an welcher der Lichteffekt 7 erzeugt wird, auf andere Weise bestimmt werden. Beispielsweise kann vorgesehen sein, dass in Abhängigkeit von dem Lenkwinkel kein statischer Lichteffekt 7 an einer festen Position des Leuchtstreifens 5 erzeugt wird, sondern dass sich der Lichteffekt 7 auch bei einem festen Lenkwinkel bewegt, wobei die Bewegung umso schneller erfolgt, je größer der Lenkwinkel ist. In diesem Fall kann durch die Bewegung des Lichteffekts 7 eine Richtung des Drehwinkel sowie anhand der Bewegungsgeschwindigkeit des Lichteffekts 7 auch der Betrag des Lenkwinkels ausgegeben werden.

In weiteren Ausführungsbeispielen erstreckt sich der Lichteffekt 7 über den gesamten Leuchtstreifen 5 oder über eine andere beleuchtete Fläche. Der Lenkwinkel wird in diesem Fall nicht dadurch ausgegeben, dass der Lichteffekt örtlich in einer anderen Position ausgegeben wird. Vielmehr verändert sich mit einem sich verändernden Lenkwinkel die Lichtintensität und/oder die Farbe der Lichtemission des Leuchtstreifens 5 bzw. des leuchtenden Bereichs. Je größer der Lenkwinkel ist, desto heller leuchtet der beleuchtete Bereich bzw. desto mehr verschiebt sich das Spektrum der Lichtemission in Richtung einer bestimmten Farbe zum Beispiel in den roten Spektralbereich.

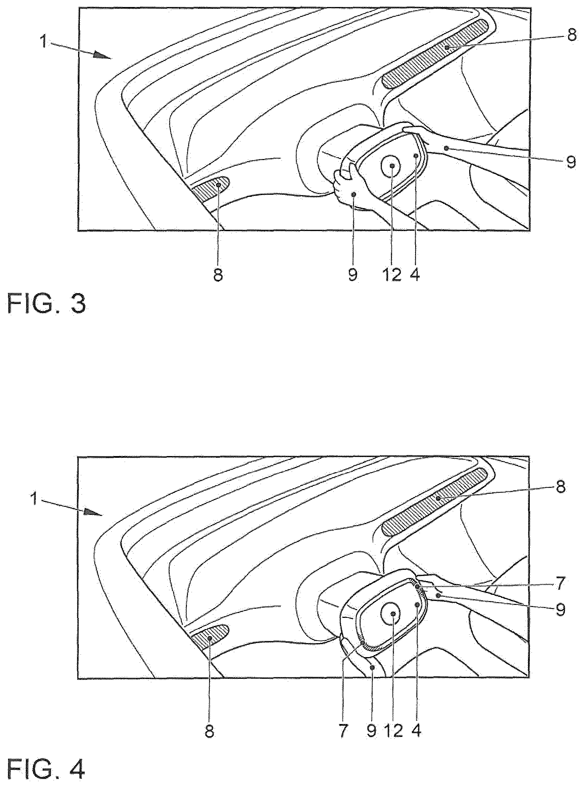

Mit Bezug zu den Figuren 3 bis 14 wird ein zweites Ausführungsbeispiel des erfindungsgemäßen Verfahrens erläutert. Dabei wird insbesondere von dem oben mit Bezug zu Figur ein erläuterten Ausführungsbeispiel des erfindungsgemäßen Fahrzeugs ausgegangen.

Bei dem in Figur 3 gezeigten Fall ist der manuelle Betriebsmodus des Fahrzeugs 1 aktiviert. Der Fahrer des Fahrzeugs 1 bedient das Lenkrad 4 mit den Händen 9 und kann insbesondere durch eine Drehung des Lenkrads 4 die Quersteuerung des Fahrzeugs 1 beeinflussen. Ferner ist am Armaturenbrett des Fahrzeugs 1 eine Innenraumbeleuchtung 8 angeordnet, die sich in Querrichtung entlang des Armaturenbretts erstreckt und eine Lichtleiste aufweist. Innerhalb dieser Lichtleiste sind Leuchtpartikel darstellbar, wobei diese Darstellung auf an sich bekannte Weise erfolgt und in weiteren Ausführungsbeispielen anders gebildet sein kann, etwa mittels eines Displays der einer Reihe von Leuchtdioden oder anderen Lichtquellen.

Bei diesem Ausführungsbeispiel ist das Lenkrad 4 nicht rund, sondern rechteckig mit abgerundeten Ecken gebildet. Die Eingabevorrichtung kann bei weiteren Ausführungsbeispielen anders gebildet sein, wobei prinzipiell beliebige Formen des Lenkrads 4 möglich sind. Bei dem Ausführungsbeispiel ist ferner auf der dem Fahrer zugewandten Seite des Lenkrads 4 ein Logo 12 angeordnet, welches als Schaltfläche 12 ausgebildet ist. Das heißt, die Schaltfläche 12 ist bedienbar und kann etwa durch eine Berührung betätigt werden. Anhand einer so erfassten Berührung kann eine Funktion ausgeführt werden, wie nachfolgend im Detail beschrieben wird.

Bei dem in Figur 4 gezeigten Fall wird ein Übergabeszenario dargestellt. Dabei übergibt der Fahrer des Fahrzeugs 1 die Steuerung an ein automatisches System, das heißt, ausgehend von dem manuellen Betriebsmodus wird der automatische Betriebsmodus des Fahrzeugs 1 aktiviert. Dies erfolgt dadurch, dass der Fahrer das Lenkrad 4 loslässt. Durch die Annäherungserfassungseinheit 4a, die bei dem Ausführungsbeispiel in das Lenkrad 4 integriert ist, wird erfasst, dass eine Berührung des Lenkrads 4, wie sie in Figur 3 gezeigt ist, gelöst wird und dass sich die Händen 9 des Nutzers vom Lenkrad 4 entfernen. Dabei wird ebenfalls erfasst, an welchen Positionen die Hände 9 relativ zu dem Lenkrad 4 angeordnet sind.

Es wird eine Übergangsanimation erzeugt, welche den Übergang von dem manuellen Betriebsmodus zu dem automatischen Betriebsmodus signalisiert. Bei dem Ausführungsbeispiel weist das Lenkrad 4 eine verdeckt angeordnete und parallel innerhalb des Umfangs des Lenkrads 4 verlaufende Einrichtung zur Erzeugung eines Lichteffekts 7 auf, wobei eine Lichtemission erzeugt und indirekt auf der Oberfläche des Lenkrads 4 sichtbar wird. Der Lichteffekt 7 ist anhand einer Lichtverteilung erfassbar, die lokale Extrema umfasst, welche einer bestimmten Position zugeordnet sind und die diese Position markieren. Diese lokalen Extrema sind in dem dargestellten Beispiel Maxima der Helligkeit des emittierten Lichts.

Der Lichteffekt wird bei dem Ausführungsbeispiel so erzeugt, dass die durch den Lichteffekt 7 markierten Positionen auf dem Lenker 4 den Positionen der letzten Berührung durch die Hände 9 des Nutzers entsprechen. Das heißt, es wird ein Lichteffekt 7 dargestellt, bei dem Maxima der Lichtintensität dort entstehen, wo die Hände 9 das Lenkrad 4 zuletzt berührt haben. Auf diese Weise wird verdeutlicht, dass die Kontrolle von den Händen 9 des Nutzers auf das Fahrzeug 1 übergeht.

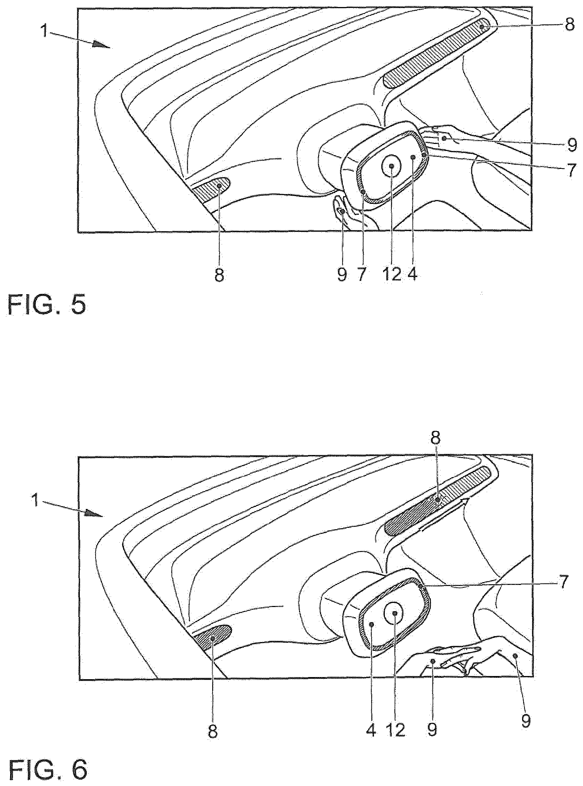

Bei dem in Figur 5 dargestellten Fall wird ein weiterer, sich anschließender Schritt der Übergabeanimation dargestellt, wobei sich der Lichteffekt 7 so verändert, dass eine Verbreiterung der in Figur 4 dargestellten Extrema der Lichtverteilung dargestellt wird, wobei sich die Lichtverteilung auf den gesamten Umfang des Lenkrads 4 ausbreitet. Insbesondere erfolgt die Verbreiterung im selben Maße, wie die Hände 9 sich vom Lenkrad entfernen.

Bei dem in Figur 6 dargestellten Fall verbreitert sich die Lichtverteilung des Lichteffekts 7 schließlich so weit, dass auf dem Lenkrad 4 ein geschlossener Ring parallel zum Umfang des Lenkrads 4 dargestellt wird. Ferner wird eine Ausbreitung des Lichteffekts 7 auf die Innenraumbeleuchtung 8 dargestellt, wobei sich unterschiedlich gefärbte Bereiche der Lichtemission entlang der Innenraumbeleuchtung 8 bewegen.

Bei dem Ausführungsbeispiel entsteht also in dem in Figur 4 gezeigten Fall ein Lichteffekt 7 mit Maxima der Lichtverteilung, welche bei den Händen des Nutzers lokalisiert sind. Diese Maxima verbreitern sich und durchlaufen das in Figur 5 dargestellte Stadium, um schließlich bei dem in Figur 6 dargestellten Fall auf die Innenraumbeleuchtung 8 überzugehen. In weiteren Ausführungsbeispielen kann der Lichteffekt 7 auf andere Weise gebildet sein und es kann ferner eine andere Weise der Ausbreitung dargestellt werden.

Bei dem in Figur 6 dargestellten Fall ist vorgesehen, dass eine automatische Lenkung des Fahrzeugs 1 erfolgt. Dabei wird für das Lenkrad 4 ein Drehwinkel in Abhängigkeit von dem Lenkwinkel eingestellt, das heißt, das Lenkrad dreht sich in dem Maße mit, in dem sich der automatisch bestimmte Lenkwinkel verändert. Die Drehung des Lenkrads 4 erfolgt insbesondere so, dass sie der Drehung entspricht, die im manuellen Betriebsmodus für die gleiche Lenkung notwendig wäre. In weiteren Ausführungsbeispielen kann das Lenkrad auf andere Weise gedreht werden, beispielsweise stärker oder schwächer, langsamer oder schneller als dies im manuellen Betriebsmodus erforderlich wäre.

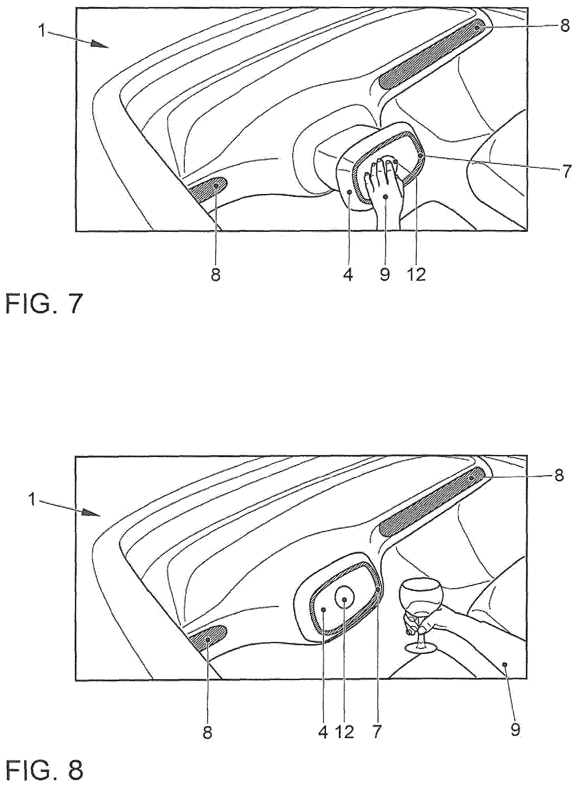

Bei dem in Figur 7 gezeigten Fall berührt der Nutzer mit der Hand 9 das auf dem Lenkrad 4 angeordnete Logo 12, welches als Schaltfläche 12 ausgebildet ist. Dadurch wird die Schaltfläche 12 betätigt und es wird ein Steuersignal erzeugt. Das Lenkrad 4 wird zum Armaturenbrett hin verschoben, wo es schließlich einrastet. Das heißt, es findet ein Übergang statt von einer Bedienposition, bei welcher das Lenkrad 4 sich drehen oder gedreht werden kann, zu einer Ruheposition, bei welcher sich das Lenkrad nicht bewegt.

Die Anordnung des Lenkrads 4 in der Ruheposition ist in Figur 8 gezeigt. Das Lenkrad 4 wird in diesem Fall nicht mehr in Abhängigkeit von dem Lenkwinkel gedreht, sondern verbleibt in einer neutralen Position. Lenkrad 4 kann nunmehr anderweitig genutzt werden, beispielsweise als ein Tisch oder als eine Unterlage, etwa um ein Mobiltelefon oder einen Tabletcomputer zu befestigen.

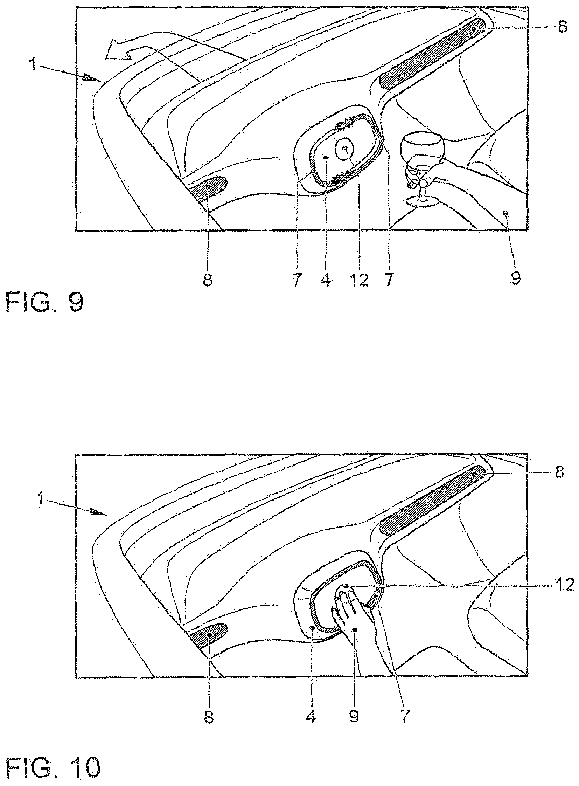

Figur 9 zeigt einen Fall, bei welchem sich das Lenkrad 4 in der Ruheposition befindet. Da hier keine Drehung des Lenkrads 4 vorgesehen ist, um einem Nutzer die Verstellung des Lenkwinkels anzuzeigen, wird der Lichteffekt 7 so erzeugt, dass diese Drehung um einen bestimmten Drehwinkel auf andere Weise ausgegeben wird. Dazu wird die Lichtverteilung im Bereich des Lenkrads 4 so gebildet, dass lokale Extrema ausgebildet werden, bei dem dargestellten Ausführungsbeispiel zwei gegenüberliegende maximale Beleuchtungsintensität. Diese Extrema bewegen sich entlang des Umfangs des Lenkrads 4 in Abhängigkeit von dem sich veränderten Lenkwinkel in einer Weise, die einer Drehung des Lenkrads entspricht, durch welche der jeweils automatisch bestimmte Lenkwinkel erreicht würde. Das heißt, wenn zum manuellen Einstellen des Lenkwinkels eine Drehung des Lenkrads 4 um einen bestimmten Drehwinkel notwendig wäre, so wird der Lichteffekt 7 bei diesem Winkel auf dem Lenkrad 4 in der Ruheposition ausgegeben.

Ferner können weitere Daten anhand der Lichtverteilung auf dem Lenkrad 4 sowie durch die Innenraumbeleuchtung 8 ausgegeben werden. Beispielsweise kann bestimmt werden, ob bei einer automatischen Fahrt eine Änderung der Fahrtrichtung geplant ist. In Abhängigkeit von der geplanten Änderung kann ein Lichteffekt 7 für das Lenkrad 4 und/oder die Innenraumbeleuchtung 8 erzeugt werden, um den entsprechenden geplanten Lenkwinkel auszugeben. Dies kann ferner durch eine farbliche Gestaltung erfolgen, beispielsweise kann sich eine Farbe eines Lichteffekts 7, durch den eine geplante Richtungsänderung angezeigt wird, verändert werden, abhängig von dem Abstand des Fahrzeugs 1 von dem Ort der geplanten Richtungsänderung, etwa einer Kreuzung.

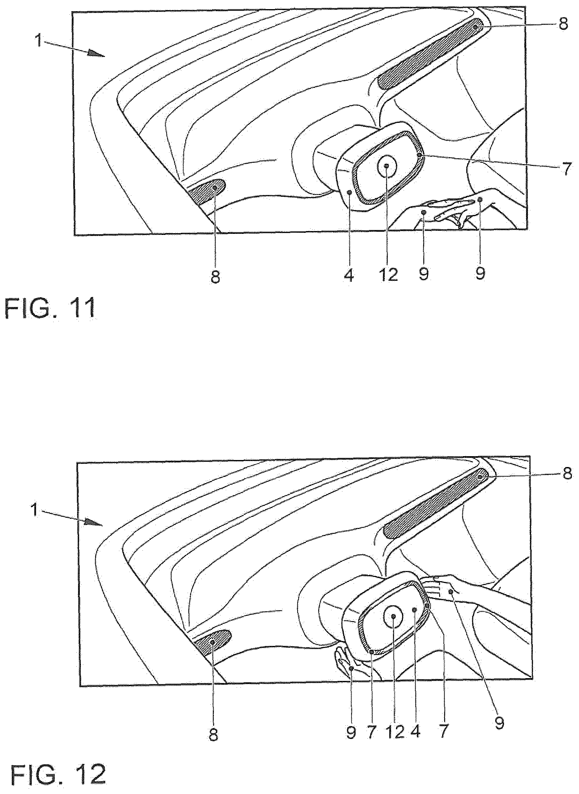

Figur 10 zeigt einen Fall, bei dem sich das Lenkrad 4 in der Ruheposition befindet und die Hand 9 des Nutzers die Schaltfläche 12 auf dem Lenkrad 4 betätigt. Dies führt zum Ausfahren des Lenkrads 4, das heißt einer Bewegung in die Bedienposition, in welcher das Lenkrad zudem drehbar ist. In Figur 11 wird der Fall gezeigt, bei dem das Lenkrad 4 die Bedienposition ausgefahren ist, wobei gleichzeitig der automatische Betriebsmodus aktiviert bleibt. Während der automatischen Steuerung des Fahrzeugs 1 dreht sich das Lenkrad 4 wieder mit, um die Einstellung des automatisch bestimmten Lenkwinkels anzuzeigen.

Bei dem in Figur 12 dargestellten Fall wird der Beginn eines Wechsels von dem automatischen zu dem manuellen Betriebsmodus gezeigt. Die Hände 9 des Nutzers nähern sich dem Lenkrad 4 und die Lichtverteilung, welche zuvor (wie in Figur 11 gezeigt) um den gesamten Umfang des Lenkrads 4 gleichmäßig ausgebildet war, sammelt sich in der Umgebung der Hände 9, das heißt, die Lichtverteilung wird so gebildet, dass ein lokales Maximum ausgebildet wird an der Stelle, die den Händen 9 des Nutzers nahe sind.

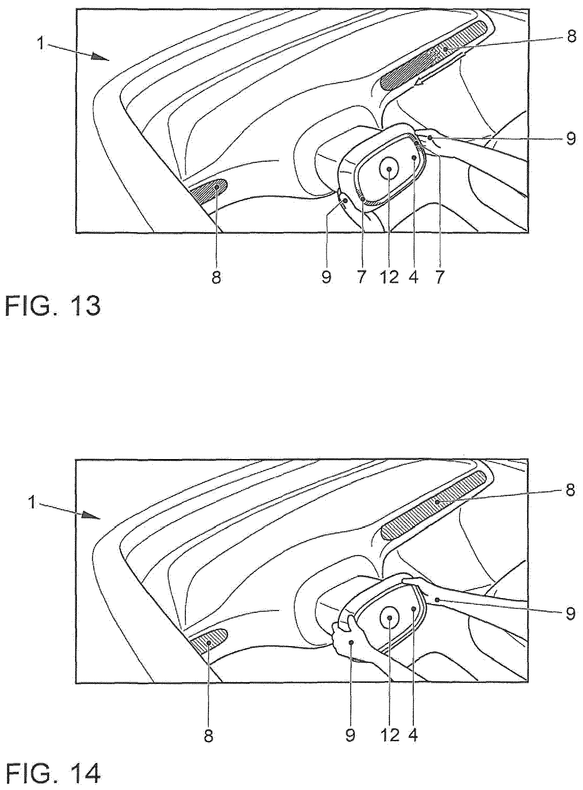

Bei dem in Figur 13 dargestellten Fall berührt der Nutzer mit den Händen 9 das Lenkrad 4 und die Lichtverteilung wird so gebildet, dass ein schmaler werdendes Intensitätsmaximum der Lichtverteilung an der Position der Hände 9 am Lenkrad 4 erzeugt wird. Gleichzeitig wird anhand der Innenraumbeleuchtung 8 dargestellt, dass der Lichteffekt 7, welcher zuvor beim Übergang von dem manuellen zum automatischen Modus auf die Innenraumbeleuchtung 8 übergegangen ist, wieder eine umgekehrte Bewegung beschreibt, das heißt vom Bereich der peripheren Innenraumbeleuchtung 8 hin zum Lenkrad 4. Auf diese Weise wird dargestellt, dass die Kontrolle von dem Fahrzeug 1 zu dem Nutzer zurück übergeht.

Bei dem in Figur 14 dargestellten Fall wird schließlich wieder der Fall wie in Figur 3 gezeigt, bei dem der Wechsel in den manuellen Betriebsmodus vollzogen ist und der Lenkwinkel anhand des manuell veränderten Drehwinkels des Lenkrads 4 eingestellt wird.

Die bei dem Ausführungsbeispiel beschriebene Erweiterung des Lichteffekts 7 mittels der Innenraumbeleuchtung 8 kann bei weiteren Ausführungsbeispielen unterbleiben, das heißt, der Lichteffekt 7 kann bei sämtlichen beschriebenen Schritten auf das Lenkrad 4 beschränkt bleiben.

In weiteren Ausführungsbeispielen kann das Lenkrad auch in der Bedienposition und im automatischen Betriebsmodus in der Ruheposition verharren, ohne sich mit einem sich verändernden Lenkwinkel mit zu drehen.

In weiteren Ausführungsbeispielen kann statt des Lenkrads 4 eine Angabe Eingabevorrichtung 4 vorgesehen sein, beispielsweise ein Steuerknüppel, ein Joystick oder ein anderes Eingabegerät.

### Bezugszeichenliste

- 1: Fahrzeug
- 2: Steuereinheit
- 3: Lenkvorrichtung
- 4: Eingabevorrichtung; Lenkrad
- 4a: Annäherungserfassungseinheit
- 5: Ausgabevorrichtung; Leuchtstreifen
- 6: Ermittlungseinheit
- 7: Lichteffekt
- 8: Innenraumbeleuchtung
- 9: Hand
- 10: Verstellungsgrad; neutrale Position
- 11: Verstellungsgrad; eingeschlagene Position
- 12: Schaltfläche; Logo
- α: Drehwinkel

## Patentansprüche

1. Verfahren zum Lenken eines Fahrzeugs (1) mit einem automatischen Betriebsmodus, bei dem
ein Lenkwinkel für eine Lenkvorrichtung (3) des Fahrzeugs (1) automatisch bestimmt und durch die Lenkvorrichtung (3) umgesetzt wird; wobei
anhand des automatisch bestimmten Lenkwinkels ein Wert eines Ausgabeparameters ermittelt wird und
der Wert des Ausgabeparameters durch eine Ausgabevorrichtung (5) mittels eines Lichteffekts (7) ausgegeben wird und
ferner ein manueller Betriebsmodus aktivierbar ist, wobei,
wenn der manuelle Betriebsmodus aktiviert ist, ein tatsächlicher Verstellungsgrad einer Eingabevorrichtung (4) als Lenkwinkel der Lenkvorrichtung (3) umgesetzt wird und
bei einem Wechsel zwischen dem automatischen und dem manuellen Betriebsmodus eine Übergangsanimation erzeugt und durch die Ausgabevorrichtung (5) ausgegeben wird,
**dadurch gekennzeichnet, dass**
die Übergangsanimation bei dem Wechsel zwischen den Betriebsmodi so erzeugt wird, dass ein Lichteffekt ausgehend von der Position, an welcher die Hand des Nutzers die Lenkvorrichtung (3) berührt oder zuletzt berührt hat, sich ausbreitet oder an dieser Position zusammengezogen wird.

2. Verfahren gemäß Anspruch 1,
**dadurch gekennzeichnet, dass**
der Lichteffekt (7) eine örtlichen Verteilung eines Lichtparameters umfasst.

3. Verfahren gemäß einem der vorhergehenden Ansprüche,
**dadurch gekennzeichnet, dass**
der Lichteffekt (7) einen Darstellungswinkel aufweist und der Wert des Ausgabeparameters anhand des Darstellungswinkels ausgegeben wird.

4. Verfahren gemäß einem der vorhergehenden Ansprüche,
**dadurch gekennzeichnet, dass**
wenn der automatische Betriebsmodus aktiviert ist, anhand des bestimmten Lenkwinkels ein berechneter Verstellungsgrad bestimmt wird, wobei
bestimmt wird, welchem tatsächlichen Verstellungsgrad der automatisch bestimmte Lenkwinkel entspricht.

5. Verfahren gemäß Anspruch 4,
**dadurch gekennzeichnet, dass**
durch den Lichteffekt (7) der berechnete Verstellungsgrad ausgegeben wird.

6. Verfahren gemäß einem der Ansprüche 1 bis 5,
**dadurch gekennzeichnet, dass**
der tatsächliche Verstellungsgrad einen Drehwinkel (α) umfasst.

7. Verfahren gemäß einem der Ansprüche 1 bis 6,
**dadurch gekennzeichnet, dass**
die Eingabevorrichtung (4), wenn der automatische Betriebsmodus aktiviert ist, zwischen einer Ruheposition und einer Bedienposition verschiebbar ist.

8. Verfahren gemäß Anspruch 7,
**dadurch gekennzeichnet, dass**
eine Bedienhandlung erfasst wird und die Eingabevorrichtung (4) in Abhängigkeit von der erfassten Bedienhandlung verschoben wird.

9. Verfahren gemäß einem der Ansprüche 1 bis 8,
**dadurch gekennzeichnet, dass**
eine Annäherung eines Nutzers an die Eingabevorrichtung (4) erfasst wird und der automatische oder der manuelle Betriebsmodus in Abhängigkeit von der erfassten Annäherung aktiviert wird.

10. Fahrzeug (1) mit einem automatischen Betriebsmodus, umfassend
eine Steuereinheit (2), durch die ein Lenkwinkel für eine Lenkvorrichtung (3) des Fahrzeugs (1) automatisch bestimmbar ist, wobei der Lenkwinkel durch die Lenkvorrichtung (3) umsetzbar ist,
eine Ermittlungseinheit (6), durch die anhand des automatisch bestimmten Lenkwinkels ein Wert eines Ausgabeparameters ermittelbar ist, und
eine Ausgabevorrichtung (5), durch die der Wert des Ausgabeparameters mittels eines Lichteffekts (7) ausgebbar ist und
ferner ein manueller Betriebsmodus aktivierbar ist und
das Fahrzeug (1) ferner eine Eingabevorrichtung (4) umfasst, wobei,
wenn der manuelle Betriebsmodus aktiviert ist, ein tatsächlicher Verstellungsgrad der Eingabevorrichtung (4) als Lenkwinkel der Lenkvorrichtung (3) umsetzbar ist, und
bei einem Wechsel zwischen dem automatischen und dem manuellen Betriebsmodus eine Übergangsanimation erzeugbar und durch die Ausgabevorrichtung (5) ausgebbar ist,
**dadurch gekennzeichnet, dass**
die Übergangsanimation bei dem Wechsel zwischen den Betriebsmodi so erzeugbar ist, dass ein Lichteffekt ausgehend von der Position, an welcher die Hand des Nutzers die Lenkvorrichtung (3) berührt oder zuletzt berührt hat, sich ausbreitet oder an dieser Position zusammengezogen wird.

11. Fahrzeug (1) gemäß Anspruch 10,
**dadurch gekennzeichnet, dass**
die Ausgabevorrichtung (5) mehrere benachbart zueinander angeordnete Lichtquellen umfasst, wobei die Lichtquellen zum Erzeugen des Lichteffekts (7) Licht emittieren, und der Lichteffekt (7) dadurch erzeugt wird, dass ein Lichtparameter des von den Lichtquellen emittierten Lichts von einzelnen benachbart zueinander angeordneten Lichtquellen oder von Gruppen von Lichtquellen, die benachbart zueinander angeordneten sind, nacheinander verändert wird.

12. Fahrzeug (1) gemäß Anspruch 10 oder 11,
**dadurch gekennzeichnet, dass**
die Eingabevorrichtung (4) eine Annäherungserfassungseinrichtung (4a) aufweist, durch die eine Annäherung eines Nutzers an die Eingabevorrichtung (4) erfassbar ist, und der automatische oder der manuelle Betriebsmodus in Abhängigkeit von der erfassten Annäherung aktivierbar ist.

## Claims

1. Method for steering a vehicle (1) with an automatic operating mode, in which method
a steering angle for a steering device (3) of the vehicle (1) is automatically determined and implemented by the steering device (3);
a value of an output parameter being determined based on the automatically determined steering angle and
the value of the output parameter being output by an output device (5) by means of a light effect (7) and
a manual operating mode also being able to be activated,
an actual degree of adjustment of an input device (4) being implemented as a steering angle of the steering device (3) when the manual operating mode is activated and
a transition animation being generated and output by the output device (5) when changing between the automatic and the manual operating mode,
**characterized in that**
the transition animation when changing between the operating modes is generated in such a way that a light effect spreads out from the position at which the user's hand touches or last touched the steering device (3) or is contracted at this position.

2. Method according to claim 1,
**characterized in that**
the light effect (7) comprises a local distribution of a light parameter.

3. Method according to any of the preceding claims,
**characterized in that**
the light effect (7) has a display angle and the value of the output parameter is output based on the display angle.

4. Method according to any of the preceding claims,
**characterized in that**
when the automatic operating mode is activated, a calculated degree of adjustment is determined based on the determined steering angle,
it being determined which actual degree of adjustment the automatically determined steering angle corresponds to.

5. Method according to claim 4,
**characterized in that**
the calculated degree of adjustment is output through the light effect (7).

6. Method according to any of claims 1 to 5,
**characterized in that**
the actual degree of adjustment includes an angle of rotation (α).

7. Method according to any of claims 1 to 6,
**characterized in that**
the input device (4), when the automatic operating mode is activated, can be moved between a rest position and an operating position.

8. Method according to claim 7,
**characterized in that**
an operating action is detected and the input device (4) is moved depending on the detected operating action.

9. Method according to any of claims 1 to 8,
**characterized in that**
an approach of a user to the input device (4) is detected and the automatic or manual operating mode is activated depending on the detected approach.

10. Vehicle (1) with an automatic operating mode, comprising
a control unit (2) by which a steering angle for a steering device (3) of the vehicle (1) can be automatically determined, the steering angle being able to be implemented by the steering device (3),
a determination unit (6) by which a value of an output parameter can be determined based on the automatically determined steering angle, and
an output device (5) through which the value of the output parameter can be output by means of a light effect (7) and
a manual operating mode can also be activated and
the vehicle (1) further comprises an input device (4),
an actual degree of adjustment of the input device (4) being able to be implemented as a steering angle of the steering device (3) when the manual operating mode is activated, and
a transition animation being able to be generated and output by the output device (5) when changing between the automatic and the manual operating mode,
**characterized in that**
the transition animation when changing between the operating modes can be generated in such a way that a light effect spreads out from the position at which the user's hand touches or last touched the steering device (3) or is contracted at this position.

11. Vehicle (1) according to claim 10,
**characterized in that**
the output device (5) comprises a plurality of light sources arranged adjacent to one another, the light sources emitting light to produce the light effect (7), and the light effect (7) being produced by successively changing a light parameter of the light emitted by the light sources of individual light sources arranged adjacent to one another or of groups of light sources arranged adjacent to one another.

12. Vehicle (1) according to claim 10 or 11,
**characterized in that**
the input device (4) has an approach detection means (4a) by which an approach of a user to the input device (4) can be detected, and the automatic or manual operating mode can be activated depending on the detected approach.

## Revendications

1. Procédé permettant de diriger un véhicule (1) comportant un mode de fonctionnement automatique, dans lequel
un angle de braquage pour un dispositif de direction (3) du véhicule (1) est déterminé automatiquement et converti par le dispositif de direction (3) ; dans lequel
une valeur d'un paramètre de sortie est définie à l'aide de l'angle de braquage déterminé automatiquement et
la valeur du paramètre de sortie est délivrée en sortie par un dispositif de sortie (5) au moyen d'un effet lumineux (7) et
en outre, un mode de fonctionnement manuel peut être activé, dans lequel,
lorsque le mode de fonctionnement manuel est activé, un degré de réglage réel d'un dispositif d'entrée (4) est converti en tant qu'angle de direction du dispositif de direction (3) et
lors d'un passage entre le mode de fonctionnement automatique et le mode de fonctionnement manuel, une animation de transition est générée et délivrée en sortie par le dispositif de sortie (5),
**caractérisé en ce que**
l'animation de transition est générée lors du passage entre les modes de fonctionnement de sorte qu'un effet lumineux se propage à partir de la position à laquelle la main de l'utilisateur touche ou a touché en dernier le dispositif de direction (3) ou se replie à cette position.

2. Procédé selon la revendication 1,
**caractérisé en ce que**
l'effet lumineux (7) comprend une distribution locale d'un paramètre lumineux.

3. Procédé selon l'une des revendications précédentes,
**caractérisé en ce que**
l'effet lumineux (7) présente un angle de représentation et la valeur du paramètre de sortie est délivrée en sortie sur la base de l'angle de représentation.

4. Procédé selon l'une des revendications précédentes,
**caractérisé en ce que**
lorsque le mode de fonctionnement automatique est activé, un degré de réglage calculé est déterminé à l'aide de l'angle de braquage déterminé, dans lequel
on détermine à quel degré de réglage réel correspond l'angle de braquage déterminé automatiquement.

5. Procédé selon la revendication 4,
**caractérisé en ce que**
le degré de réglage calculé est délivré en sortie par l'effet lumineux (7).

6. Procédé selon l'une des revendications 1 à 5,
**caractérisé en ce que**
le degré de réglage réel comprend un angle de rotation (α).

7. Procédé selon l'une des revendications 1 à 6,
**caractérisé en ce que**
le dispositif d'entrée (4), lorsque le mode de fonctionnement automatique est activé, peut être déplacé entre une position de repos et une position de manipulation.

8. Procédé selon la revendication 7,
**caractérisé en ce que**
une action de manipulation est détectée et le dispositif d'entrée (4) est déplacé en fonction de l'action de manipulation détectée.

9. Procédé selon l'une des revendications 1 à 8,
**caractérisé en ce que**
l'approche d'un utilisateur vers le dispositif d'entrée (4) est détectée et le mode de fonctionnement automatique ou le mode de fonctionnement manuel est activé en fonction de l'approche détectée.

10. Véhicule (1) comportant un mode de fonctionnement automatique, comprenant
une unité de commande (2) au moyen de laquelle un angle de braquage peut être déterminé automatiquement pour un dispositif de direction (3) du véhicule (1), dans lequel l'angle de braquage peut être converti par le dispositif de direction (3),
une unité de définition (6) au moyen de laquelle une valeur d'un paramètre de sortie peut être définie à l'aide de l'angle de braquage déterminé automatiquement, et
un dispositif de sortie (5) au moyen duquel la valeur du paramètre de sortie peut être délivrée en sortie au moyen d'un effet lumineux (7) et
en outre, un mode de fonctionnement manuel peut être activé et
le véhicule (1) comprend en outre un dispositif d'entrée (4), dans lequel,
lorsque le mode de fonctionnement manuel est activé, un degré de réglage réel du dispositif d'entrée (4) peut être converti en tant qu'angle de braquage du dispositif de direction (3), et
lors d'un passage entre le mode de fonctionnement automatique et le mode de fonctionnement manuel, une animation de transition peut être générée et délivrée en sortie par le dispositif de sortie (5),
**caractérisé en ce que**
l'animation de transition peut être générée lors du passage entre les modes de fonctionnement de sorte qu'un effet lumineux se propage à partir de la position à laquelle la main de l'utilisateur touche ou a touché en dernier le dispositif de direction (3) ou se replie à cette position.

11. Véhicule (1) selon la revendication 10,
**caractérisé en ce que**
le dispositif de sortie (5) comprend plusieurs sources lumineuses disposées de manière à être adjacentes les unes aux autres, dans lequel les sources lumineuses émettent de la lumière pour générer l'effet lumineux (7), et l'effet lumineux (7) est généré en faisant varier successivement un paramètre lumineux de la lumière émise par les sources lumineuses de sources lumineuses individuelles disposées de manière à être adjacentes les unes aux autres ou de groupes de sources lumineuses disposés de manière à être adjacents les uns aux autres.

12. Véhicule (1) selon la revendication 10 ou 11,
**caractérisé en ce que**
le dispositif d'entrée (4) présente un appareil de détection d'approche (4a) au moyen duquel l'approche d'un utilisateur vers le dispositif d'entrée (4) peut être détectée, et le mode de fonctionnement automatique ou le mode de fonctionnement manuel peut être activé en fonction de l'approche détectée.
